# FASCICULE DE BREVET EUROPEEN

(11) **EP 1 004 905 B1**
(45) Date de publication et mention de la délivrance du brevet: **10.04.2002**
(21) Numéro de dépôt: 99402859.5
(22) Date de dépôt: 18.11.1999
(51) Int. Cl.: G02B 6/16, H04B 10/18

(54) **Fibre de compensation de dispersion pour système de transmission à fibre optique à multiplexage en longueur d'onde employant une fibre de ligne à dispersion décalée**
Dispersionskompensierende Faser für ein faseroptisches Wellenlängenmultiplexübertragungssystem mit eine Dispersionsverschobene Faserstrecke
Dispersion compensation fibre for an optical wavelength division multiplexing system using a dispersion shifted line fibre

(30) Priorité: 23.11.1998 FR 9814705
(43) Date de publication de la demande: 31.05.2000
(73) Titulaire: ALCATEL, 75008 Paris (FR)
(72) Inventeur: Rousseau, Jean-Claude, 78400 Chatou (FR); Paillot, Marianne, 92600 Asnieres (FR)
(74) Mandataire: Laroche, Danièle

(56) Documents cités:
- EP-A- 0 554 714
- EP-A- 0 598 554
- EP-A- 0 674 193
- US-A- 5 568 583
- ONISHI M ET AL: "THIRD-ORDER DISPERSION COMPENSATING FIBRES FOR NON-ZERO DISPERSION SHIFTED FIBRE LINKS" ELECTRONICS LETTERS, vol. 32, no. 25, 5 décembre 1996 (1996-12-05), page 2344/2345 XP000685332 ISSN: 0013-5194
- PATENT ABSTRACTS OF JAPAN vol. 097, no. 003, 31 mars 1997 (1997-03-31) & JP 08 313750 A (FURUKAWA ELECTRIC CO LTD:THE), 29 novembre 1996 (1996-11-29)

## Description

La présente invention concerne le domaine des fibres optiques monomodes, pouvant être utilisées tout particulièrement pour la compensation de dispersion, ainsi que le domaine des transmissions par fibre optique, et plus particulièrement le domaine des transmissions à multiplexage en longueur d'onde à fibre de ligne à dispersion décalée.

Pour des fibres optiques, on qualifie généralement le profil d'indice de réfraction en fonction de la courbe représentative des variations de l'indice de réfraction en fonction du rayon de la fibre. On représente de façon classique sur les abscisses la distance r au centre de la fibre, et sur les ordonnées l'indice de réfraction, défini par sa différence en valeur absolue ou en pour cent par rapport à l'indice de la gaine de la fibre. On parle ainsi de profil d'indice en "échelon", en "trapèze" ou en "triangle" pour des courbes représentatives de la variation de l'indice en fonction du rayon qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits à multiplexage en longueur d'onde (ou dans la suite WDM, acronyme de l'anglais "Wavelength Division Multiplexing"), il est avantageux de gérer la dispersion chromatique, notamment pour des débits supérieurs ou égaux à 10 Gbit/s; l'objectif est d'obtenir, pour toutes les valeurs de longueur d'onde du multiplex ou peigne, une dispersion chromatique cumulée sensiblement nulle sur la liaison, de sorte à limiter l'élargissement des impulsions. Une valeur cumulée de quelques centaines de ps/nm pour la dispersion est acceptable. L'augmentation du débit unitaire de chaque canal rend encore plus nécessaire la compensation de la dispersion chromatique cumulée.

D'autre part, sont apparues sur le marché des fibres à dispersion décalée, ou DSF (acronyme de l'anglais "Dispersion shifted fibers"). Ces fibres sont telles qu'à la longueur d'onde de transmission à laquelle elles sont utilisées, qui est en général différente de la longueur d'onde de 1,3 µm pour laquelle la dispersion de la silice est sensiblement nulle, la dispersion chromatique de l'onde transmise est sensiblement nulle; c'est-à-dire que la dispersion chromatique de la silice, non nulle, est compensée - d'où l'emploi du terme décalé - par une augmentation de l'écart d'indice Δn entre le coeur de la fibre et la gaine optique. Cet écart d'indice permet de décaler la longueur d'onde pour laquelle la dispersion chromatique est nulle; il est obtenu par l'introduction de dopants dans la préforme, lors de la fabrication de celle-ci, par exemple par un processus de MCVD connu en soi, et qui n'est pas décrit plus en détail ici. Une valeur typique pour la différence d'indice entre la gaine et le coeur de la fibre est 15.10⁻³; l'augmentation de l'indice dans la silice peut par exemple être obtenue en utilisant comme dopant du germanium. On appelle NZ-DSF (acronyme de l'anglais "non-zero dispersion shifted fibers") les fibres DSF pour lesquelles le zéro de dispersion chromatique est en dehors de la plage de longueur d'onde utilisée pour la transmission, typiquement en dehors de la plage de longueurs d'onde allant de 1520 à 1580 nm.

Il a été proposé d'utiliser des fibres de compensation de dispersion (DCF, acronyme de "dispersion compensating fiber"), pour corriger la dispersion chromatique induite par une fibre de ligne à saut d'indice. Par exemple la demande de brevet européen EP-A1-0.554.714 décrit une fibre optique à compensation de dispersion, pour des fibres de ligne classiques, de profil d'indice de type à saut d'indice à dispersion chromatique nulle aux environs de 1310 nm, ou des fibres à dispersion plate, comprenant deux zéros de dispersion chromatique entre 1300 et 1600 nm. Une telle fibre a une dispersion totale inférieure à -20 ps/nm-km à longueur d'onde donnée dans la fourchette de 1520 à 1565 nm, et une atténuation de moins de 1 dB/km. La forme générale de profil d'une telle fibre est par exemple donnée comportant une partie centrale d'indice supérieur à celui de la gaine, étroite, un anneau d'indice supérieur à celui de la gaine et inférieur à celui de la partie centrale, et deux tranchées d'indice égal, respectivement entre ladite partie centrale et l'anneau, et entre l'anneau et la gaine. La deuxième tranchée est facultative.

Mais dans l'utilisation de telles DCF il n'est pas tenu compte à la fois de la pente de dispersion chromatique sur toute la plage de longueur d'onde considérée, et de la dispersion chromatique. Ce qui fait que si par exemple on cherche à compenser uniquement la dispersion chromatique sans compenser la pente de ladite dispersion chromatique, il se produit une dérive dans la compensation, le système n'étant pas complètement compensé à la sortie car la pente de dispersion chromatique n'est pas suffisamment compensée. En effet, il faut faire en sortie qu'à l'extrémité toutes les longueurs d'onde aient la même dispersion chromatique, sinon il faut compenser longueur par longueur ce qui devient vite prohibitif à la fois techniquement et financièrement. Ainsi dons ce cas, il faut alors utiliser plus de longueur de fibre DCF, ce qui induit alors une dispersion chromatique plus grande et un coût plus élevé.

La fibre selon l'invention vise à résoudre ce problème de l'art antérieur, en ce qu'elle permet de compenser correctement non seulement la dispersion cumulée dans la fibre de ligne, mais aussi la pente de dispersion. Elle assure une bonne transmission à multiplexage en longueur d'onde, sans induire d'atténuation importante, et en limitant les effets non-linéaires. L'invention s'applique particulièrement à des systèmes de transmissions utilisant des fibres NZ-DSF, utilisant des impulsions de type RZ, NRZ ou solitons.

Plus précisément, l'invention propose une fibre optique monomode présentant pour une longueur d'onde de 1550 nm une pente de dispersion comprise entre -0,8 et - 0,5 ps/nm².km, et une dispersion chromatique comprise entre -130 ps/nm.km et - 90 ps/nm.km, et telle qu'elle présente une gaine et un coeur dont le profil d'indice présente une partie centrale d'indice supérieur à celui de la gaine, un anneau d'indice supérieur à celui de la gaine et inférieur à celui de la partie centrale, et une tranchée d'indice inférieur à celui de la gaine entre la partie centrale et l'anneau.

Avantageusement, la fibre de ligne est sans zéro de dispersion chromatique dans la plage de longueurs d'onde du multiplex.

Un autre avantage de la fibre selon l'invention est, dans son utilisation pour compenser la dispersion chromatique d'une fibre de ligne, de pouvoir obtenir un rapport entre la dispersion chromatique et la pente de dispersion chromatique du même ordre que ledit rapport pour la fibre de ligne.

En particulier, la fibre selon l'invention permet généralement de pouvoir utiliser une longueur de fibre de compensation de dispersion de moins de 10 fois la longueur de fibre de ligne, de préférence de moins de 20 fois ladite longueur.

De préférence, la fibre selon l'invention présente pour une longueur d'onde de 1550 nm une pente de dispersion chromatique comprise entre - 0,7 et -0,6 ps/nm².km.

Avantageusement, la fibre de dispersion de compensation présente pour une longueur d'onde de 1550 nm une dispersion chromatique voisine de -100 ps/nm.km.

La différence (Δn₁) entre l'indice de la partie centrale du coeur et l'indice de la gaine peut être comprise entre 20.10⁻³ et 30.10⁻³, et de préférence voisine de 25.10⁻³.

Avantageusement, la partie centrale du coeur s'étend jusqu'à un rayon (r₁) compris entre 1,15 et 1,25 µm, et de préférence voisine de 1,2 µm.

La différence (Δn₃) entre l'indice de l'anneau du coeur et l'indice de la gaine peut être comprise entre 0,5.10⁻³ et 1,5.10⁻³, et de préférence voisine de 1.10⁻³.

Avantageusement, l'anneau présente une épaisseur (r₃ - r₂) comprise entre 3,5 et 4,5 fois le rayon (r₁) de la partie centrale, et de préférence voisine de quatre fois ce rayon.

La différence (Δn₂) entre l'indice de la tranchée située entre la partie centrale et l'anneau et l'indice de la gaine peut être comprise entre - 4,5.10⁻³ et - 5,5.10⁻³, et de préférence voisine de - 5.10⁻³.

Avantageusement, la tranchée située entre la partie centrale et l'anneau présente une épaisseur (r₂ - r₁) comprise entre 2,5 et 3,5 fois le rayon (r₁) de la partie centrale, et de préférence voisine de trois fois ce rayon.

Selon un mode de réalisation préféré de l'invention, le profil d'indice présente de préférence entre l'anneau et la gaine une tranchée d'indice inférieur à celui de la gaine.

La différence (Δn₄) entre l'indice de la tranchée située entre l'anneau et la gaine et l'indice de la gaine peut être comprise entre - 0,1.10⁻³ et - 0,5.10⁻³ et de préférence voisine de - 0,3.10⁻³.

Avantageusement, la tranchée située entre l'anneau et la gaine présente une épaisseur (r₄ - r₃) comprise entre 0,8 et 1,2 fois le rayon (r₁) de la partie centrale, et de préférence voisine de ce rayon.

L'invention concerne aussi l'utilisation pour la compensation de dispersion d'une fibre optique monomode selon l'invention.

Enfin, l'invention concerne un système de transmission à fibre optique à multiplexage en longueur d'onde, comprenant au moins une section de fibre de ligne monomode à dispersion décalée, et au moins une section de fibre monomode de compensation de dispersion selon l'invention.

Dans un mode de réalisation, la fibre de ligne présente une dispersion chromatique à 1550 nm comprise entre 2 et 6 ps/nm.km, et de préférence de l'ordre de 4 ps/nm.km.

Dans un autre mode de réalisation, la fibre de ligne présente une pente de dispersion chromatique à 1550 nm comprise entre 0,06 et 0,08 ps/nm².km, et de préférence de l'ordre de 0,075 ps/nm².km.

D'autres caractéristiques et avantages de l'invention apparaîtront à la lecture de la description qui suit de modes de réalisation de l'invention, donnée à titre d'exemple uniquement, et en référence aux dessins annexés, dont la figure unique montre un profil d'indice d'une fibre de compensation de dispersion selon l'invention.

L'invention propose une nouvelle fibre optique monomode, particulièrment utilisable pour la compensation de dispersion, généralement destinée à être utilisée dans un système de transmission à multiplexage en longueur d'onde avec une fibre de ligne à dispersion décalée, du type DSF, ou de préférence NZ-DSF.

Une fibre à dispersion décalée NZ-DSF présente typiquement les caractéristiques suivantes:
- dispersion à 1550 nm entre 2 et 6 ps/nm.km, par exemple de l'ordre de 4 ps/nm.km;
- pente de dispersion à 1550 nm entre 0,06 et 0,08 ps/nm².km, par exemple de l'ordre de 0,075 ps/nm².km;
- une longueur d'onde λ₀ d'annulation de la dispersion chromatique en dehors de la plage d'un multiplex de longueur d'onde, i. e. en dehors d'une plage de 1520 à 1580 nm. On obtient de la sorte dans la plage du multiplex une dispersion suffisamment élevée pour limiter les effets non-linéaires comme le mélange à quatre ondes.

La fibre de l'invention peut être utilisée pour compenser la dispersion dans un système de transmission à multiplexage de longueur d'onde utilisant comme fibre de ligne une telle fibre NZ-DSF. Elle est particulièrement adaptée pour les systèmes à haut débit, i. e. présentant un débit supérieur à 10 Gbit/s. Elle assure que la dispersion cumulée sur une liaison reste inférieure à 1000 ps.

La fibre selon l'invention est une fibre optique monomode, qui présente pour une valeur de longueur d'onde de 1550 nm une pente de dispersion entre - 0,8 et -0,5 ps/nm².km, et une dispersion chromatique entre - 130 ps/nm.km et -90 ps/nm.km. Comme le montrent les exemples ci-dessous, ces valeurs sont adaptées à la compensation de la dispersion chromatique dans un système en WDM à fibre de ligne NZ-DSF.

La valeur de la pente de dispersion chromatique est choisie de sorte à compenser la pente de dispersion chromatique d'une fibre à dispersion décalée, en même temps que l'on compense la dispersion chromatique de cette fibre. Une valeur inférieure à - 0,6 ps/nm².km est appropriée. Cette valeur est supérieure en valeur absolue à la valeur de la pente de dispersion pour une fibre de dispersion de compensation classique.

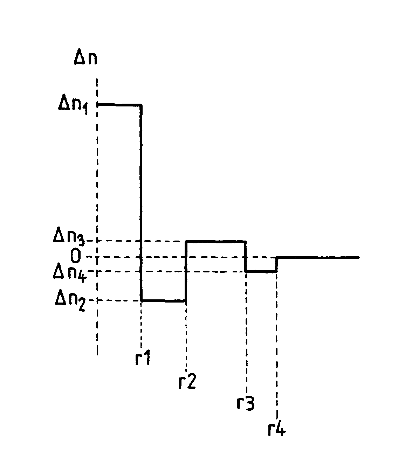

La figure unique montre un exemple de profil d'indice d'une fibre selon l'invention. La fibre présente un coeur avec une partie centrale en rectangle d'indice n₁ sensiblement constant et supérieur à celui n_{c} de la gaine, pour des rayons inférieurs à r₁. La différence Δn₁ entre l'indice n₁ et l'indice n_{c} de la gaine vaut dans l'exemple de la figure 25.10⁻³. Une valeur entre 20.10⁻³ et 30.10⁻³ est appropriée. Dans l'exemple, le rayon r₁ vaut 1,2 µm. Ledit rayon r₁ est plus généralement compris entre 1,15 et 1,25 µm.

Autour de cette partie centrale, la fibre présente entre les rayons r₂ et r₃ un anneau d'indice n₃ supérieur à celui de la gaine et inférieur à celui de la partie centrale du coeur. Dans le mode de réalisation de la figure, l'écart Δn₃ entre l'indice de l'anneau et l'indice de la gaine vaut 1.10⁻³. Il est avantageusement compris entre 0,5.10⁻³ et 1,5.10⁻³. L'anneau présente une épaisseur (r₃ - r₂) voisine de quatre fois le rayon r₁ de la partie centrale du coeur. Selon l'invention, l'épaisseur (r₃ - r₂) peut varier entre 3,5 et 4,5 fois le rayon r₁.

L'anneau est séparé du coeur, entre les rayons r₁ et r₂ par une tranchée d'indice inférieur à celui de la gaine; une différence Δn₂ avec l'indice de la gaine de l'ordre de - 5.10⁻³ est appropriée. Plus généralement, une différence d'indice entre -4,5.10⁻³ et - 5,5.10⁻³ convient. L'épaisseur (r₂ - r₁) de la tranchée est de l'ordre de 3 fois le rayon r₁ de la partie centrale du coeur. Une épaisseur (r₂ - r₁) de la tranchée comprise entre 2,5 et 3,5 fois le rayon r₁ de la partie centrale conviendrait.

Entre l'anneau et la gaine, la fibre présente encore une tranchée d'indice inférieur à celui de la gaine. Dans le mode de réalisation de la figure, cette tranchée présente une différence Δn₄ avec l'indice de la gaine de - 0,3.10⁻³, et une épaisseur (r₄ - r₃) de l'ordre du rayon r₁ de la partie centrale du coeur. Des valeurs de la différence d'indice Δn₄ entre - 0,1.10⁻³ et - 0,5.10⁻³ et des valeurs de l'épaisseur (r₄ - r₃) entre 0,8 et 1,2 fois le rayon ri de la partie centrale conviendraient. La présence de cette tranchée au voisinage de la gaine dépend du procédé de fabrication de la fibre, et on pourrait s'en passer.

Le profil d'indice de la figure permet d'obtenir les valeurs de dispersion et de pente de dispersion qui sont mentionnées dans la suite de la description.

On donne maintenant un exemple d'utilisation de la fibre de l'invention pour compenser la dispersion dans un système de transmission à multiplexage en longueur d'onde avec de la fibre de ligne NZ-DSF. Dans cet exemple, le système de transmission comprend des sections de fibre de ligne à dispersion décalée présentant à 1550 nm une dispersion chromatique de l'ordre de + 4 ps/nm.km, et une pente de dispersion chromatique pour la même valeur de longueur d'onde de 0,075 ps/nm².km. On peut utiliser pour cela une fibre du type de celle décrite dans US-A-4 715 679. On utilise des sections de fibre de ligne de 80 km.

On intercale entre les sections de fibre de ligne des sections de fibre de compensation de dispersion selon l'invention, avec une dispersion de l'ordre de - 128 ps/nm.km à 1550 nm, et une pente de dispersion de l'ordre de - 0,7 ps/nm².km; chaque section présente une longueur de 3,5 km.

Dans ce cas, on obtient après 83,5 km de propagation les valeurs suivantes de dispersion (DC, en ps/nm.km), de pente de dispersion chromatique (pente de DC, en ps/nm².km) pour différentes valeurs de longueurs d'onde:

| à 1525 nm | |
|---|---|
| fibre DSF de ligne | + 2,12 |
| fibre DCF | - 112 |
| DC résultante des deux fibres | - 2,7 |
| pente de DC résultante des deux fibres | + 0,045 |

| à 1550 nm | |
|---|---|
| fibre DSF de ligne | + 4 |
| fibre DCF | - 128 |
| DC résultante des deux fibres | - 1,53 |
| pente de DC résultante des deux fibres | + 0,04 |

| à 1575 nm | |
|---|---|
| fibre DSF de ligne | + 5,87 |
| fibre DCF | - 148 |
| DC résultante des deux fibres | - 0,57 |
| pente de DC résultante des deux fibres | + 0,035 |

| à 1600 nm | |
|---|---|
| fibre DSF de ligne | + 7,75 |
| fibre DCF | - 170 |
| DC résultante des deux fibres | +0,3 |
| pente de DC résultante des deux fibres | + 0,03 |

Cet exemple montre que la fibre de l'invention permet de compenser la dispersion chromatique dans le système de transmission. L'invention permet en outre de maintenir une faible valeur d'atténuation résultante, du fait notamment de la faible longueur de fibre de compensation de dispersion utilisée.

Les fibres utilisées selon l'invention peuvent facilement être fabriquées par l'homme du métier à l'aide de techniques connues, comme le MCVD ou les autres techniques couramment utilisées pour la fabrication des fibres optiques.

Bien entendu, l'invention n'est pas limitée aux exemples de réalisation décrits. On peut notamment utiliser d'autres profils de fibre que celui de la figure pour obtenir une fibre permettant la compensation dans un système WDM à fibre de ligne DSF ou NZ-DSF.

## Revendications

1. Fibre optique monomode comprenant une gaine et un coeur dont le profil d'indice présente une partie centrale d'indice supérieur à celui de la gaine, un anneau d'indice supérieur à celui de la gaine et inférieur à celui de la partie centrale, et une tranchée d'indice inférieur à celui de la gaine entre la partie centrale et l'anneau, **caractérisée en ce qu'**elle présente pour une longueur d'onde de 1550 nm une pente de dispersion comprise entre - 0,8 et -0,5 ps/ nm².km, et une dispersion chromatique comprise entre - 130 ps/nm.km et - 90 ps/nm.km,

2. Fibre selon la revendication 1, telle qu'elle présente pour une longueur d'onde de 1550 nm une pente de dispersion chromatique entre - 0,7 et - 0,6 ps/nm².km.

3. Fibre selon l'une des revendications 1 ou 2, telle qu'elle présente pour une longueur d'onde de 1550 nm une dispersion chromatique voisine de -100 ps/nm.km.

4. Fibre selon l'une des revendications 1 à 3, telle que la différence (Δn₁) entre l'indice de la partie centrale du coeur et l'indice de la gaine est entre 20.10⁻³ et 30.10⁻³

5. Fibre selon la revendication 4, telle que la différence (Δn₁) entre l'indice de la partie centrale du coeur et l'indice de la gaine est voisine de 25.10⁻³.

6. Fibre selon l'une des revendications 4 et 5, telle que la partie centrale du coeur s'étend jusqu'à un rayon (r₁) entre 1,15 et 1,25 µm

7. Fibre selon la revendication 6, telle que la partie centrale du coeur s'étend jusqu'à un rayon (r₁) voisin de 1,2 µm.

8. Fibre selon l'une des revendications 4 à 7, telle que la différence (Δn₃) entre l'indice de l'anneau du coeur et l'indice de la gaine est comprise entre 0,5.10⁻³ et 1,5.10⁻³

9. Fibre selon la revendication 8, telle que la différence (Δn₃) entre l'indice de l'anneau du coeur et l'indice de la gaine est voisine de 1.10⁻³.

10. Fibre selon l'une des revendications 4 à 9, telle que l'anneau présente une épaisseur (r₃ - r₂) comprise entre 3,5 et 4,5 fois le rayon (r₁) de la partie centrale.

11. Fibre selon la revendication 10, telle que l'anneau présente une épaisseur (r₃ - r₂) voisine de quatre fois le rayon (r₁) de la partie centrale.

12. Fibre selon l'une des revendications 4 à 10, telle que la différence (Δn₂) entre l'indice de la tranchée située entre la partie centrale et l'anneau et l'indice de la gaine est comprise entre - 4,5.10⁻³ et - 5,5.10^{-3.}

13. Fibre selon la revendication 12, telle que la différence (Δn₂) entre l'indice de la tranchée située entre la partie centrale et l'anneau et l'indice de la gaine est voisine de - 5.10⁻³.

14. Fibre selon l'une des revendications 4 à 13, telle que la tranchée située entre la partie centrale et l'anneau présente une épaisseur (r₂ - r₁) comprise entre 2,5 et 3,5 fois le rayon (r₁) de la partie centrale.

15. Fibre selon la revendication 14, telle que la tranchée située entre la partie centrale et l'anneau présente une épaisseur (r₂ - r₁) voisine de trois fois le rayon (r₁) de la partie centrale.

16. Fibre selon l'une des revendications 1 à 15, telle que le profil d'indice présente entre l'anneau et la gaine une tranchée d'indice inférieur à celui de la gaine.

17. Fibre selon la revendication 16 telle que la différence (Δn₄) entre l'indice de la tranchée située entre l'anneau et la gaine et l'indice de la gaine est comprise entre - 0,1.10⁻³ et - 0,5.10⁻³

18. Fibre selon la revendication 17 telle que la différence (Δn₄) entre l'indice de la tranchée située entre l'anneau et la gaine et l'indice de la gaine est voisine de -0,3.10⁻³.

19. Fibre selon l'une des revendications 16 ou 18 telle que la tranchée située entre l'anneau et la gaine présente une épaisseur (r₄ - r₃) comprise entre 0,8 et 1,2 fois le rayon (r₁) de la partie centrale.

20. Fibre selon la revendication 19 telle que la tranchée située entre l'anneau et la gaine présente une épaisseur (r₄ - r₃) voisine du rayon (r₁) de la partie centrale.

21. Utilisation d'une fibre optique monomode selon l'une des revendications 1 à 20 pour la compensation de dispersion.

22. Un système de transmission à fibre optique à multiplexage en longueur d'onde, comprenant au moins une section de fibre de ligne monomode à dispersion décalée, et au moins une section de fibre monomode de compensation de dispersion selon l'une des revendications 1 à 21.

## Claims

1. A monomode optical fiber comprising a cladding and a core whose index profile features a central part having an index higher than that of the cladding, a ring having an index higher than that of the cladding and lower than that of the central part, and a trench between the central part and the ring having an index lower than that of the cladding, the fiber being **characterized in that** it has at a wavelength of 1550 nm a dispersion slope from -0.8 ps/nm².km to -0.5 ps/nm².km and a chromatic dispersion from -130 ps/nm.km to -90 ps/nm.km.

2. A fiber according to claim 1 having at a wavelength of 1550 nm a chromatic dispersion slope from -0.7 ps/nm².km to -0.6 ps/nm².km.

3. A fiber according to claim 1 or claim 2 having at a wavelength of 1550 nm a chromatic dispersion of around -100 ps/nm.km.

4. A fiber according to any one of claims 1 to 3, wherein the difference (Δn₁) between the index of the central part of the core and the index of the cladding is from 20×10⁻³ to 30×10⁻³.

5. A fiber according to claim 4, wherein the difference (Δn₁) between the index of the central part of the core and the index of the cladding is around 25×10⁻³.

6. A fiber according to claim 4 or 5, wherein the central part of the core extends out to a radius (r₁) from 1.15 µm to 1.25 µm.

7. A fiber according to claim 6, wherein the central part of the core extends out to a radius (r₁) of around 1.2 µm.

8. A fiber according to any of claims 4 to 7, wherein the difference (Δn3) between the index of the ring of the core and the index of the cladding is from 0.5×10⁻³ to 1.5×10⁻³.

9. A fiber according to claim 8, wherein the difference (Δn3) between the index of the ring of the core and the index of the cladding is around 1×10⁻³.

10. A fiber according to any of claims 4 to 9, wherein the ring has a thickness (r₃ - r₂) from 3.5 times to 4.5 times the radius (r₁) of the central part.

11. A fiber according to claim 10, wherein the ring has a thickness (r₃ - r₂) close to 4 times the radius (r₁) of the central part.

12. A fiber according to any of claims 4 to 10, wherein the difference (Δn₂) between the index of the trench between the central part and the ring and the index of the cladding is from -4.5×10⁻³ to -5.5×10⁻³.

13. A fiber according to claims 12, wherein the difference (Δn₂) between the index of the trench between the central part and the ring and the index of the cladding is around -5×10⁻³.

14. A fiber according to any of claims 4 to 13, wherein the trench between the central part and the ring has a thickness (r₂ - r₁) from 2.5 times to 3.5 times the radius (r₁) of the central part.

15. A fiber according to claim 14, wherein the trench between the central part and the ring has a thickness (r₂ - r₁) close to 3 times the radius (r₁) of the central part.

16. A fiber according to any of claims 1 to 15, wherein the index profile features a trench between the ring and the cladding whose index is lower than that of the cladding.

17. A fiber according to claim 16, wherein the difference (Δn₄) between the index of the trench between the ring and the cladding and the index of the cladding is from -0.1×10⁻³ to -0.5×10⁻³.

18. A fiber according to claim 17, wherein the difference (Δn₄) between the index of the trench between the ring and the cladding and the index of the cladding is around -0.3×10⁻³.

19. A fiber according to claim 16 or claim 18, wherein the trench between the ring and the cladding has a thickness (r₄ - r₃) from 0.8 times to 1.2 times the radius (r₁) of the central part.

20. A fiber according to claim 19, wherein the trench between the ring and the cladding has a thickness (r₄ - r₃) close to the radius (r₁) of the central part.

21. The use of a monomode optical fiber according to any of claims 1 to 20 to compensate dispersion.

22. A wavelength division multiplex optical fiber transmission system comprising at least one monomode dispersion shifted fiber section and at least one monomode dispersion compensating fiber section according to any of claims 1 to 21.

## Patentansprüche

1. Optische Monomodusfaser mit einer Hülle und einer Seele, deren Indexprofil einen Zentralbereich aufweist, dessen Index größer ist als derjenige der Hülle, einen Ring, dessen Index größer ist als derjenige der Hülle und kleiner als derjenige des zentralen Bereiches und einen Einschnitt, dessen Index kleiner ist als derjenige der Hülle zwischen dem zentralen Bereich und dem Ring, **dadurch gekennzeichnet, daß** sie für eine Wellenlänge von 1550 nm einen Dispersionsabfall zwischen -0,8 und -0,5 ps/nm².km aufweist und eine chromatische Dispersion zwischen -130 ps/nm.km und -90 ps/nm.km.

2. Faser nach Anspruch 1, die für eine Wellenlänge von 1550 nm einen chromatischen Dispersionsabfall zwischen -0,7 und -0,6 ps/nm².km aufweist.

3. Faser nach einem der Ansprüche 1 oder 2, die für eine Wellenlänge von 1550 nm einen chromatische Dispersion im Bereich von -100 ps/nm.km aufweist.

4. Faser nach einem der Ansprüche 1 bis 3, bei der die Differenz (Δn₁) zwischen dem Index des zentralen Bereiches der Seele und dem Index der Hülle zwischen 20.10⁻³ und 30.10.⁻³ liegt.

5. Faser nach Anspruch 4, bei der die Differenz (Δn₁) zwischen dem Index des zentralen Bereiches der Seele und dem Index der Hülle im Bereich von 25.10⁻³ liegt.

6. Faser nach einem der Ansprüche 4 und 5, bei der der zentrale Bereich der Seele sich bis zu einem Radius (r₁) zwischen 1,15 und 1,25 µm erstreckt.

7. Faser nach Anspruch 6, bei der der zentrale Bereich der Seele sich bis zu einem Radius (r₁) im Bereich von 1,2 µm erstreckt.

8. Faser nach einem der Ansprüche 4 bis 7, bei der die Differenz (Δn₃) zwischen dem Index des Ringes der Seele und dem Index der Hülle enthalten ist zwischen 0,5.10⁻³ und 1,5.10⁻³.

9. Faser nach Anspruch 8, bei der die Differenz (Δn₃) zwischen dem Index des Ringes der Seele und dem Index der Hülle im Bereich von 1.10⁻³ liegt.

10. Faser nach einem der Ansprüche 4 bis 9, bei der der Ring eine Dicke (r₃ - r₂) zwischen 3,5 und 4,5 mal dem Radius (r₁) des zentralen Bereiches aufweist.

11. Faser nach Anspruch 10, bei der der Ring eine Dicke (r₃ - r₂) im Bereich von viermal dem Radius (r₁) des zentralen Bereiches aufweist.

12. Faser nach einem der Ansprüche 4 bis 10, bei der die Differenz (Δn₂) zwischen dem Index des Einschnittes, der zwischen dem zentralen Bereich und dem Ring angeordnet ist und dem Index der Hülle enthalten ist zwischen -4,5.10⁻³ und -5,5.10⁻³.

13. Faser nach Anspruch 12, bei der die Differenz (Δn₂) zwischen dem Index des Einschnittes, der zwischen dem zentralen Bereich und dem Ring angeordnet ist, und dem Index der Hülle im Bereich von -5.10⁻³ liegt.

14. Faser nach einem der Ansprüche 4 bis 13, bei der der Einschnitt, der zwischen dem zentralen Bereich und dem Ring angeordnet ist, eine Dicke (r₂ - r₁) aufweist, enthalten zwischen 2,5 und 3,5 mal dem Radius (r₁) des zentralen Bereiches.

15. Faser nach Anspruch 14, bei der der Einschnitt, der zwischen dem zentralen Bereich und dem Ring angeordnet ist, eine Dicke (r₂ - r₁) aufweist, die im Bereich von dreimal dem Radius (r₁) des zentralen Bereiches liegt.

16. Faser nach einem der Ansprüche 1 bis 15, bei der das Indexprofil zwischen dem Ring und der Hülle einen Einschnitt aufweist, dessen Index kleiner ist als derjenige der Hülle.

17. Faser nach Anspruch 16, bei der die Differenz (Δn₄) zwischen dem Index des Einschnittes, der zwischen dem Ring und der Hülle angeordnet ist, und dem Index der Hülle enthalten ist zwischen -0,1.10.⁻³ und 0,5.10⁻³.

18. Faser nach Anspruch 17, bei der die Differenz (Δn₄) zwischen dem Index des Einschnittes, der zwischen dem Ring und der Hülle angeordnet ist und dem Index der Hülle im Bereich von -0,3.10⁻³ liegt.

19. Faser nach einem der Ansprüche 16 oder 18, bei der der Einschnitt, der zwischen dem Ring und der Hülle angeordnet ist, eine Dicke (r₄ - r₃) aufweist, die enthalten ist zwischen 0,8 und 1,2 mal dem Radius (r₁) des zentralen Bereiches.

20. Faser nach Anspruch 19, bei der der Einschnitt, der zwischen dem Ring und der Hülle angeordnet ist, eine Dicke (r₄ - r₃) aufweist, im Bereich des Radius (r₁) des zentralen Bereiches.

21. Verwendung einer optischen Monomodusfaser gemäß einem der Ansprüche 1 bis 20 für die Kompensation der Dispersion.

22. Übertragunssystem mit optischer Faser und Multiplexen der Wellenlänge, umfassend zumindest einen Abschnitt der Faser der Monomodusleitung mit verschobener Dispersion und zumindest einen Abschnitt der Monomodusfaser zur Kompensation der Dispersion gemäß einem der Ansprüche 1 bis 21.
